# EUROPÄISCHE PATENTSCHRIFT

(11) **EP 2 628 848 B1**
(45) Veröffentlichungstag und Bekanntmachung des Hinweises auf die Patenterteilung: **02.01.2019**
(21) Anmeldenummer: 13000662.0
(22) Anmeldetag: 08.02.2013
(51) Int. Cl.: B32B 5/02, A41D 27/02, B32B 5/26, D06P 5/28, B32B 7/12, B32B 5/08, D06M 17/04, D06M 17/00

(54) **Verbund aus textilem Flächengebilde und Oberstoff**
Composite of a textile fabric and upper material
Composite ayant une base textile et une couche en surface

(30) Priorität: 15.02.2012 DE 102012002805
(43) Veröffentlichungstag der Anmeldung: 21.08.2013
(73) Patentinhaber: Carl Freudenberg KG, 69469 Weinheim (DE)
(72) Erfinder: Grynaeus, Peter, 69488 Birkenau (DE); Zecchi, PierPaolo, 50012 Bagno a Ripoli (IT); Visani, Simone, 24124 Bergamo (IT); Thoenissen, Gerhard, 69483 Wald-Michelbach (DE)

(56) Entgegenhaltungen:
- WO-A1-2006/084700
- WO-A1-2010/108562
- WO-A2-2007/062712
- DE-A1- 2 940 471
- DE-B1- 2 643 743

## Beschreibung

### Technisches Gebiet

Die Erfindung betrifft ein Verfahren zur Herstellung eines Verbunds aus einem thermisch fixierbaren textilen Flächengebilde, wie insbesondere einem bedruckten Einlagestoff oder Futterstoff, und einem Oberstoff. Ferner wird ein mit diesem Verfahren hergestellter Verbund, sowie dessen Verwendung zur Herstellung von Oberbekleidung beschrieben.

Einlagestoffe sind das unsichtbare Gerüst der Bekleidung. Sie sorgen für korrekte Passformen und optimalen Tragekomfort. Je nach Anwendung unterstützen sie die Verarbeitbarkeit, erhöhen die Funktionalität und stabilisieren die Bekleidung. Neben der Bekleidung können diese Funktionen in technischen Textilanwendungen, z. B. Möbel-, Polster- sowie Heimtextilien-Industrie Anwendung finden.

Wichtige Eigenschaftsprofile für Einlagestoffe sind Weichheit, Sprungelastizität, Griff, Wasch- und Pflegebeständigkeit sowie ausreichende Abriebbeständigkeit des Trägermaterials im Gebrauch.

Einlagestoffe können aus Vliesstoffen, Geweben oder Gewirken bestehen, die meist zusätzlich mit einer Haftmasse versehen sind, wodurch die Einlage mit einem Oberstoff meist thermisch durch Hitze und/oder Druck verklebt werden kann (Fixiereinlage). Die Einlage wird somit auf einen Oberstoff laminiert. Als Oberstoff wird im Allgemeinen die von außen sichtbare äußere Gewebeschicht bezeichnet. Viele Kleidungsstücke verfügen über mehrere Schichten. Der Oberstoff ist die äußerste Lage, das Futter die ganz dem Körper zugewandte Lage.

Die genannten verschiedenen textilen Flächengebilde haben je nach Herstellungsverfahren unterschiedliche Eigenschaftsprofile. Gewebe bestehen aus Fäden/Garnen in Kette- und Schussrichtung, Gewirke bestehen aus Fäden/Garnen, die über eine Maschenbindung zu einem textilen Flächengebilde verbunden werden. Vliesstoffe bestehen aus zu einem Faserflor abgelegten Einzelfasern, die mechanisch, chemisch oder thermisch gebunden werden.

Zur Herstellung bedruckter textiler Flächengebilde kann das Transfer- oder Thermoumdruckverfahren verwendet werden. Hierzu wird das zu druckende Dessin zuerst auf ein Thermoumdruckmedium bzw. einen Zwischenträger (Papier oder Folie) appliziert und anschließend in einem Umdruckprozess (Transferdruckverfahren) bei hohen Temperaturen (180-210°C) auf den zu bedruckenden Träger appliziert.

Aufgabe der vorliegenden Erfindung ist es, einen Verbund aus einem thermisch fixierbaren textilen Flächengebilde und einem Oberstoff, insbesondere zur Herstellung von Oberbekleidung, bereitzustellen, welcher mit einem Druckmuster versehen ist, der sehr gute haptische Eigenschaften aufweist und darüber hinaus auch noch einfach und kostengünstig herstellbar ist.

Es ist bekannt Einlagestoffe oder Futterstoffedurch Mehrfarbendruck oder Transferdruck mit Dessins zu versehen. Diese bemusterten textilen Flächen können dann unter technisch komplizierten Auftragsverfahren mit thermoplastischem Schmelzkleber versehen werden. Oftmals treten Schwierigkeiten wegen Veränderung des Druckbildes durch Verzüge im Prozess und/oder Veränderung der Farben durch Sublimation oder chemische Reaktion mit Dispersionsbestandteilen beim Auftrag des Schmelzklebers auf.

Ebenfalls bekannt ist es mit der Fixiereinlage oder dem fixierbaren Futterstoff und dem Oberstoff ein Laminat durch Fixieren zu bilden. Anschließend wird die Einlagen-/Futterstoffseite zum Beispiel mit Thermoumdruck mit einem Dessin versehen. Nachteilig hieran ist, dass der Oberstoff beim Prozess in Mitleidenschaft gezogen wird bzw. dass durch die hohen Temperaturen die Haftung zwischen Oberstoff und Einlage nachlässt

DE 29 40 471 A1 beschreibt eine mehrlagige Bahn aus geschmeidigem Material, die aus mindestens zwei Grundbahnen gebildet ist, deren Materialart und/oder Farbe und/oder Struktur identisch oder nicht identisch sind und die untereinander paarweise mittels einer großen Zahl von Teilchen (Körnchen) aus thermoplastischem Material verbunden sind, wobei diese Teilchen zwischen den zwei Bahnen entlang mehrerer paralleler Linien und mit zueinander konstantem Abstand angeordnet sind und irreversibel an beiden Bahnen anhaften. Auch beschrieben ist ein Verfahren zur Herstellung der Bahn, gemäß welchem ein Sandwich aus mindestens zwei Grundbahnen aus geeigneten Materialien hergestellt wird, zwischen die ein Filet oder ein Netz aus thermoplastischem Material eingesetzt ist, durch Kalanderwalzen bei vorgegebener Geschwindigkeit, vorgegebenem Druck und vorgegebener Kalandriertemperatur, so daß die Bahnen mit Hilfe der Teilchen des Filets aneinander anhaften, und die zwischen benachbarten Teilchen bestehenden feinen Verbindungen brechen. Simultan zum Thermoverschweißen kann mit Hilfe eines Übertragungspapiers die Außenfläche der oberen Bahn und/oder der unteren Bahn des zwischen die Kalanderwalzen durchgeführten Sandwichs thermobedruckt werden.

WO 2007/062712 A3 beschreibt ein fixierbares textiles Flächengebilde beschrieben, welches insbesondere als Einlagestoff in der Textilindustrie verwendbar ist. Das erfindungsgemäße fixierbare textile Flächengebilde umfasst einen Träger auf Basis eines Vliesstoffs, Gewebes, Gestricks, Gewirkes oder dergleichen, welcher mindestens auf einer Seite mit einer Haftmassenbeschichtung versehen ist. Auf der Haftmassenbeschichtung ist erfindungsgemäß wenigstens eine zusätzliche Lage aus Fasern, welche eine vorgegebene Funktionalität aufweisen, aufgebracht. Als Technologie zum Aufbringen der Haftmassebeschichtungen auf den Träger werden beispielhaft Pulverpunkt-, Pastendruck-, Doppelpunkt-, Streu-, Hotmeltverfahren genannt.

WO 2006/084700 A1 beschreibt ein textiles Flächengebilde mit einer Beschichtung aus zwei übereinanderliegenden Schichten aus thermoplastischen Heißsiegelklebern unterschiedlicher Zusammensetzung, wobei der auf den ersten Heißsiegelkleber aufgetragene zweite Heißsiegelkleber einen Schmelzpunkt > 135°C und einen Melt-Flow-Index (MFI)-Wert von 50 bis 250 g/10 Minuten (190°C /2,16 kg) aufweist. Der Auftrag des Heißsiegelklebers kann durch Siebdruck oder durch eine strukturierte Walze erfolgen.

DE 26 43 743 B1 beschreibt ein Verfahren zur Herstellung einer textilen Tapete durch Verkleben einer textilen Bahn mit einer Papierbahn mittels eines Klebers. Die Verklebung erfolgt mittels eines Trocken-Heißklebers und zusammen mit einem Bedrucken der textlien Bahn mittels eines bedruckten Transferpapiers unter Anwendung von Wärme und Druck in einem Arbeitsgang.

### Darstellung der Erfindung

Diese Aufgabe wird erfindungsgemäß gelöst durch ein Verfahren zur Herstellung eines Verbunds aus einem Oberstoff und einem thermisch fixierbaren textilen Flächengebilde bei gleichzeitigem Auftrag eines Dessins durch Thermoumdruck umfassend folgende Verfahrensschritte:
a) Bereitstellung der Komponenten:
   1) mit einem Dessin bedrucktes Thermoumdruckmedium
   2) mit einer Haftmasse versehenes, thermisch fixierbares, textiles Flächengebilde, vorzugsweise ausgebildet als Einlage- und/oder Futterstoff und
   3) Oberstoff;
b) Zusammenführung der Komponenten bei gleichzeitiger Hitzebehandlung und Druckbehandlung des Verbunds bei einer Temperatur von 160 bis 240°C, wobei mindestens eine Außenfläche des textilen Flächengebildes mit dem Dessin versehen und simultan eine Fixierung des Flächengebildes am Oberstoff stattfindet.

Überraschend wurde gefunden, dass ein Verbund aus einem thermisch fixierbaren textilen Flächengebilde und einem Oberstoff besonders einfach und kostengünstig verfestigt und gleichzeitig mit einem Druckmuster versehen werden kann, wenn ein textiles fixierbares Flächengebilde sandwichartig mit einem Oberstoff und einem Thermoumdruckmedium belegt und einer Hitzebehandlung bei 160 bis 240 °C unterworfen wird.

Durch die Hitzebehandlung findet in einem Arbeitsgang eine Fixierung des Flächengebildes am Oberstoff und das Bedrucken des Flächengebildes mit einem Druckmuster im Transferdruckverfahren statt.

Bei dem Transfer- oder Umdruckverfahren wird das zu druckende Dessin zuerst auf ein Thermoumdruckmedium bzw. einen Zwischenträger (Papier oder Folie) appliziert und anschließend in einem Umdruckprozess (Thermodruckverfahren) bei hohen Temperaturen (180-210°C) auf den zu bedruckenden Träger appliziert. Die Applikation der Farben auf den Zwischenträger kann wiederum sowohl im Rotations- oder Flachfilm- bzw. Tischfilmdruckverfahren aber auch im Ink-Jet-Druckverfahren erfolgen. Durch ein bahnenförmiges Zusammenfügen des Thermoumdruckmediums mit dem textilen Flächengebilde werden die Farbstoffe bei o. g. hohen Temperaturen durch Sublimation von dem Thermoumdruckmedium auf das textile Flächengebilde übertragen, wo sie dann gegebenenfalls durch leichtes Anschmelzen der Oberfläche in den obersten Schichten des Drucksubstrates verankert bleiben.

Eine weitere Möglichkeit Sublimationstinten aufzubringen eröffnen die sogenannten Direktdrucksublimationstechnologien. Hier werden Sublimationstinten direkt auf das textile Substrat, vorrangig mittels Ink-Jet-Technologie, aufgebracht und sofort an der Maschine durch Temperaturbeaufschlagung fixiert.

In einem Umdruckverfahren wird ein Abziehbild, das ein übertragbares Material oder "Transfer"-Material trägt, in unmittelbare Nähe oder in Kontakt mit der Oberfläche eines Rezeptors gebracht und Bedingungen unterworfen, bei denen sich das Transfermaterial von dem Abziehbild zu dem Rezeptor bewegt. In den meisten dieser Verfahren wird das Transfer-Material, wenn es zu dem Rezeptor gewandert ist, permanent daran gebunden.

Abziehbilder können hergestellt werden durch Drucken oder anderweitiges Ablagern des gewählten Transfermaterials auf einem geeigneten Substrat, in einem Muster, das, wenn sich das Transfermaterial zu dem Rezeptor bewegt, auf dem Rezeptor spiegelbildlich reproduziert wird.

Eine besondere Form des Umdruckens, die als Sublimationsumdrucken bekannt ist, wird verwendet um textile Stoffe, insbesondere solche, die synthetische Fasern (wie Polyester-, Polyamid-, Akryl-, Triacetat- und Acetatfasern) aufweisen, mit farbigen Farbstoffen zu färben. In solchen Verfahren wird das textile Gewebe mit einem Sublimationsabziehbild bei einer erhöhten Temperatur, von normalerweise zwischen 200 und 220°C, in Kontakt gebracht, wobei das Sublimationsabziehbild ein Papiersubstrat umfaßt, welches ein Design trägt, das unter Verwendung einer Tinte, die mit einer Sublimationsfarbe beladen ist, bedruckt wurde, und die Farbe dazu gebracht wird zu sublimieren und sich von dem Papiersubstrat zu dem Textil zu bewegen, wo sie absorbiert wird und den Stoff mit einem Spiegelbild des Designs, das ursprünglich auf dem Abziehbild gedruckt war, färbt.

Bei der simultanen Fixierung der Einlage und Transferierung des Dessins vom Transferdruckpapier ist es von Vorteil wenn Temperaturen, Drücke und Verweilzeiten im Umdruckkalander oder Fixierpresse den eingesetzten Komponenten angepasst werden. Bei Celluloseacetatstoffen muss die Compoundbildungstemperatur unter 180°C bleiben, da darüber eine Verhärtung des Futterstoffes erfolgt. Bei polyesterhaltigen Einlagen oder Futterstoffen ist eine Verhärtung bei 200°C eher weniger gegeben aber die Oberstoffe können temperaturempfindlich sein.

Erfindungsgemäß bevorzugt werden als Dispersionsfarbstoffe anthrachinoide Farbstoffe, wie Hydroxy- und/oder Aminoanthrachinone, Azofarbstoffe, Chinophthalonfarbstoffe, Azomethinfarbstoffe, Stilbenfarbstoffe oder Nitrodiarylaminfarbstoffe verwendet Beim Nasstransferprozess können auch Farbstoffe zum Einsatz kommen, die nicht sublimierbar sind. Die Farbstoffe gelangen hierbei durch Wasserdampf auf die Textilie.

Vorteilhafterweise ist das Thermoumdruckmedium als Papier oder Folie ausgebildet und enthält das zu druckendes Dessin.

Denkbar ist, das zu bedruckende Flächengebilde zunächst sandwichartig mit dem Thermoumdruckmedium und dem Oberstoff zu belegen und das Ganze dann diskontinuierlich auf Heißpressen oder kontinuierlich in Kalandern auf die erforderliche Temperatur zu bringen, bei der die verwendeten Dispersionsfarbstoffe sublimieren und der Oberstoff fest auf das Flächengebilde auflaminiert wird. Auf diese Weise bekommt man in einem Arbeitsgang mit höchster Druckqualität bedruckte und gleichzeitig mit einem Oberstoff beschichtete Flächengebilde. Die dabei anzuwendende Temperatur hängt von den verwendeten Dispersionsfarbstoffen und der Zusammensetzung der Folie ab. Vorzugsweise liegen die Übertragungstemperaturen zwischen 150 und 250° C.

Vorteilhaft am Transfer- oder Umdruckverfahren ist insbesondere, dass sich unterschiedliche Materialien in Fotoqualität bedrucken lassen, die vergleichsweise geringen Kosten und eine bessere Umweltverträglichkeit. Auf Binde- und Lösungsmittel, die bei anderen Druckverfahren in der Faser vorhanden sein können und ausgewaschen werden müssten, kann verzichtet werden. Außerdem ist der Druck sehr resistent gegen Ultraviolettstrahlung und andere Umwelteinflüsse.

Zweckmäßigerweise erfolgt die Zusammenführung der drei Komponenten durch Belegen einer Außenfläche eines im Verbund mit einem Oberstoff angeordneten textilen fixierbaren Flächengebildes mit einem Thermoumdruckmedium.

Gemäß einer bevorzugten Ausführungsform der Erfindung ist das Flächengebilde als fixierbarer Einlagestoff oder fixierbarer Futterstoff ausgebildet. Die Auswahl der für das textile Flächengebilde einzusetzenden Fasern, des Bindemittels und des thermoplastischen Polymers erfolgt im Hinblick auf den jeweiligen Anwendungszweck bzw. die besonderen Qualitätsanforderungen. Durch die Erfindung sind hier prinzipiell keinerlei Grenzen gesetzt. Der Fachmann kann hier leicht die für seine Anwendung geeignete Materialkombination auffinden.

So können die Fasern des Faserflors aus Chemiefasern oder aber auch aus Naturfasern bestehen. Als Chemiefasern kommen vorzugsweise Polyester-, Polyamid-, Polyacrylnitril, Celluloseregenerat- und/oder Bindefasem zum Einsatz, als Naturfasern Wolle- oder Baumwollfasem.

Insbesondere im Hinblick auf das im erfindungsgemäßen Verfahren eingesetzte Thermoumdruckverfahren sind Polyester, Polyamid und Celluloseacetatfaser und/oder deren Mischungen vorteilhaft.

Die Chemiefasern können hierbei kräuselbar, gekräuselte und/oder ungekräuselte Stapelfasern, kräuselbare, gekräuselte und/oder ungekräuselte, direkt gesponnene Endlosfasern und/oder endliche Fasern, wie Meltblown-Fasern, umfassen.

Besonders geeignet sind Fasern mit einem Fasertiter bis 6,7 dtex. Gröbere Titer werden aufgrund ihrer großen Fasersteifigkeit normalerweise nicht eingesetzt. Bevorzugt sind Fasertiter im Bereich von 0,7 bis 1,7 dtex, doch auch Mikrofasern mit einem Titer deutlich unter 1 dtex sind denkbar.

Für die Herstellung des Faserflors können die an sich bekannten Technologien eingesetzt werden. Für den schwach vorgebundenen Faserflor mit moderaten Vliesstofffestigkeiten können kostengünstige Faserrohstoffe eingesetzt werden, vorausgesetzt, dass sie die Anforderungen an den Griff erfüllen. Auch kann die Prozessführung vereinfacht werden.

Im Falle der Verwendung von Stapelfasern ist es vorteilhaft, diese mit mindestens einer Krempel zu einem Faserflor zu kardieren.

Bevorzugt ist hier eine Wirrlegung (Random-Technologie), doch auch Kombinationen aus Längs- und/oder Querlegung bzw. noch kompliziertere Krempelanordnungen sind möglich, wenn spezielle Vliesstoffeigenschaften ermöglicht werde sollen bzw. wenn mehrlagige Faserstrukturen gewünscht werden.

Der Faserflor kann thermisch oder mittels eines (Niederdruck)-Wasserstrahlverfahrens gebunden werden.

Das Flächengebilde kann ein- oder mehrlagig aufgebaut sein.

Besonders vorteilhaft wird als textiles Flächengebilde ein Vliesstoff eingesetzt.Ebenso vorteilhaft kann ein Futterstoffgewebe zum Einsatz kommen.

Erfindungsgemäß können die textilen Flächengebilde nach sämtlichen flächenbildenden Techniken hergestellt werden. Beispiele dafür sind Weben, Wirken, Stricken oder nasse oder trockenen Vliesherstellungsverfahren.

Typischerweise weisen die textilen Flächengebilde erfindungsgemäß, insbesondere die Vliesstoffe, Flächengewichte von 10 bis 500 g/m² auf.

Besonders bevorzugt kommen textile Flächengebilde mit Flächengewichten von 30 bis 200 g/m² zum Einsatz.

Es können auch chemisch gebundene Vliesstoffe eingesetzt werden. Bei chemisch gebundenen Vliesstoffen wird der Faserflor durch Imprägnieren, Besprühen oder mittels sonst üblicher Auftragsmethoden mit einem Bindemittel (z. B. Acrylatbinder) versehen und anschließend kondensiert.

Denkbar ist auch der Einsatz von thermisch gebundenen Vliesstoffen. Thermisch gebundene Vliesstoffen werden zur Verwendung als Einlagestoffe üblicherweise kalander- oder durch Heißluft verfestigt. Bei Einlagevliesstoffen hat sich heutzutage die punktförmige Kalanderverfestigung als Standardtechnologie durchgesetzt. Das Faserflor besteht dabei in der Regel aus Fasern aus Polyester oder Polyamid und wird mittels eines Kalanders bei Temperaturen um den Schmelzpunkt der Faser verfestigt, wobei eine Walze des Kalanders mit einer Punktgravur versehen ist. Ohne eine Punktanordnung würde das textile Flächengebilde flächenartig verfestigt und ungeeignet hart im Griff sein.

Denkbar ist der Einsatz einer Trägerlage aus einem Faserflor als thermisch fixierbares textiles Flächengebilde, welches zumindest teilweise mittels eines Bindemittels gebunden ist und wobei mindestens auf der dem Oberstoff zugewandten Seite der Trägerlage eine Haftmassenstruktur aufgebracht ist.

Vorteilhafterweise ist die Haftmasse thermisch aktivierbar und besteht aus thermoplastischen Polymeren. Die Technologie zum Aufbringen der Haftmassebeschichtungen erfolgt nach dem Stand der Technik in einem separaten Arbeitsschritt auf den Vliesstoff oder Futterstoff. Als besonders geeignete Haftmassenauftragstechnologien haben sich Pulverpunkt-, Pastendruck-, Doppelpunkt-, Streu-, Hotmeltverfahren erwiesen.

Weit verbreitet ist der Pastendruck. Bei dieser Technologie wird eine wässrige Dispersion aus thermoplastischen Polymeren, üblicherweise in Partikelform mit einer Partikelgröße < 80 µm, Verdickem und Laufhilfsmitteln hergestellt und dann pastös mittels eines Rotationssiebdruckverfahrens auf die Trägerlage meist punktförmig aufgedruckt. Anschließend wird die bedruckte Trägerlage einem Trocknungsprozess unterzogen. Pastendruck ist in der Haftleistung und im Haftmassenrückschlag wegen der fehlenden Sperrschicht weniger gut als ein Haftmassenauftrag nach dem Doppelpunktverfahren.

Ein Doppelpunkt weist einen zweischichtigen Aufbau auf, er besteht aus einem Unter- und einem Oberpunkt. Der Unterpunkt dringt in das Basismaterial ein und dient als Sperrschicht gegen Haftmassenrückschlag und zur Verankerung der Oberpunktpartikel. Geeignete Unterpunkte bestehen beispielsweise aus Bindemittel oder einem thermoplastischen Material als Heißsiegelkleber. Je nach eingesetzter Chemie trägt der Unterpunkt neben der Verankerung im Basismaterial auch als Sperrschicht zur Verhinderung des Haftmassenrückschlages bei. Hauptklebekomponente im zweischichtigen Verbund ist primär der Oberpunkt aus einem thermoplastischen Material, welcher als Pulver auf den Unterpunkt aufgestreut werden kann. Nach dem Streuvorgang wird der überschüssige Teil des Pulvers (zwischen den Punkten der unteren Schicht) wieder abgesaugt. Nach anschließendem Sintern ist der Oberpunkt auf dem Unterpunkt (thermisch) gebunden und kann als Klebstoff zum Oberpunkt dienen.

Je nach Einsatzzweck des Einlagestoffes werden eine unterschiedliche Anzahl an Punkten aufgedruckt und/oder die Haftmassenmenge oder die Geometrie des Punktmusters variiert Eine typische Punktanzahl sind z. B. CP 110 bei einer Auflagemenge von 9 g/m² bzw. CP 52 mit einer Auflagemenge von 11 g/m².

Zur Bildung der Haftmassenstruktur können thermoplastische Polymere, vorzugsweise (Co)-Polyester-, (Co)-Polyamid-, Polyolefin-, Polyurethan-, Ethylenvinylacetat-basierende Polymere und/oder Kombinationen (Gemische und Copolymerisate) der genannten Polymere, eingesetzt werden.

Besonders gute Ergebnisse werden erzielt, wenn die erste Lage einen ersten Heißsiegelkleber und die zweite Lage einen zweiten Heißsiegelkleber enthält, wobei der auf dem ersten Heißsiegelkleber aufgetragene zweite Heißsiegelkleber einen Schmelzpunkt größer 135°C und einen Melt-Flow-Index (MFI)-Wert von 50 bis 250 g/10 Minuten (190°C/2,16 kg) aufweist.

Doppelschichtige Haftmassenpunkte zeichnen sich durch einen geringen Haftmassenrückschlag aus, da die zuerst aufgebrachte Schicht als Sperrschicht wirkt. Weiter wurde überraschend festgestellt, dass trotz vergleichbar hoher MFI-Werte der eingesetzten Polymeren kein Heißsiegelkleberdurchschlag durch den Oberstoff festgestellt werden konnte.

Mit Doppelpunkt belegte textile Flächengebilde können wie folgt hergestellt werden:
a) Herstellung eines textilen Flächengebildes durch eine textile Flächenbildungstechnik in an sich bekannter Weise,
b) Auftragen einer Schicht eines Bindemittels oder eines ersten Heißsiegelklebers in Form eines regelmäßigen oder irregulären Musters auf das textile Flächengebilde in an sich bekannter Weise und
c) Auftragen einer Schicht eines zweiten Heißsiegelklebers auf das textile Flächengebilde, so dass sich eine Schicht aus dem zweiten Heißsiegelkleber über der Schicht des Bindemittels bzw. des ersten Heißsiegelklebers in an sich bekannter Weise ausbildet.

Das Verhältnis der Massen des erfindungsgemäß eingesetzten Bindemittels bzw. des ersten Heißsiegelklebers und des zweiten Heißsiegelklebers kann in weiten Bereichen schwanken und bewegt sich typischerweise im Bereich von 5:1 bis 1:5, vorzugsweise im Bereich von 2:1 bis 1:3.

Die Haftmassenstruktur enthält vorzugsweise mindestens einen schmelzfähigen Heißsiegelkleber, ausgewählt aus der Gruppe bestehend aus (Co)-Polyester-, (Co)-Polyamid-, Polyolefin-, Polyurethan-, Ethylenvinylacetatbasierende Polymere und/oder Kombinationen (Gemische und Copolymerisate) der genannten Polymere.

Das Bindemittel kann ein Bindemittel des Acrylat-, Styrolacrylat-, EthylenVinylacetat-, Butadien-acrylat-, SBR-, NBR- und/oder Polyurethan-Typs sein.

Der Begriff Polyolefin umfasst neben von alpha-Olefinen, vorzugsweise von Propylen oder insbesondere von Ethylen, abgeleiteten Homopolymeren auch Copolymere, die neben von einem alpha-Olefin abgeleiteten Struktureinheiten auch von anderen ethylenisch ungesättigten Kohlenwasserstoffen, beispielsweise von weiteren alpha-Olefinen und/oder von Vinylaromaten, wie Styrol, abgeleitete Struktureinheiten enthalten.

Beispiele für alpha-Olefine sind Ethylen, Prop-1-en, But-1-en, Pent-1-en, Hex-1-en, Oct-1-en oder Dec-1-en.

Es können alle an sich bekannten Polyolefin-Typen eingesetzt werden. Beispiele dafür sind Polyolefine, die nach dem Ziegler-Natta-Verfahren oder unter Einsatz von Metallocen-Katalysatoren hergestellt worden sind.

Beispiele für bevorzugt eingesetzte Polyolefine sind Polyethylene, Polypropylene öder Copolymere abgeleitet von Ethylen und Propylen.

Weitere Beispiele sind Copolymere abgeleitet von Ethylen oder von Propylen mit weiteren alpha-Olefinen höherer Kohlenstoffzahl, wie But-1-en, Pent-1-en, Hex-1-en, Oct-1-en oder Dec-1-en.

Als Polyethylene kommen Polyethylene verschiedenster Dichte und Schmelzbereiche in Betracht, sofern die oben definierten Bereiche für den MFI-Wert eingehalten werden.

Beispiele dafür sind Polyethylene niedriger Dichte (LDPE) einschließlich der linearen Polyethylene niedriger Dichte (LLDPE) und Polyethylene hoher Dichte (HDPE).

Vorzugsweise enthält eine, insbesondere beide Schichten des Heißsiegelklebers neben dem jeweiligen Polyolefin(gemisch) noch ein modifiziertes Polyolefin. Darunter ist ein Copolymer zu verstehen, das von mindestens einem alpha-Olefin, und einer ethylenisch ungesättigten Säure oder deren Anhydrid oder einer ethylenisch ungesättigten Epoxidverbindung oder einem Gemisch zweier oder mehreren dieser Comonomeren abgeleitet ist. Dabei kann die Modifikation auf beliebige Weise erfolgt sein, beispielsweise als Copolymerisation von alpha-Olefin Monomer(en) zusammen mit ausgewähltem Comonomer(en) und/oder als Pfropfung von ausgewählten polaren Comonomer(en) auf ein Polyolefin.

Beispiele für alpha-Olefine oder andere olefinisch ungesättigte Kohlenwasserstoffe, die zur Herstellung dieser Gruppe von Copolymeren einzeln oder in Kombination miteinander eingesetzt worden sind, wurden bereits weiter oben bei der Beschreibung der Herstellung der Homo- oder Copolymeren abgeleitet von einem oder mehreren alpha-Olefinen aufgezählt. Bevorzugt setzt man in der Gruppe der modifizierten Polyolefine Polypropylene oder insbesondere Polyethylene oder Copolymere abgeleitet von Ethylen und Acrylsäure- und/oder Methacrylsäureestern, insbesondere den Alkylestern, ein. Ganz besonders bevorzugt verwendet zur Modifikation mit polaren Gruppen Polyethylene niedriger Dichte (LDPE), lineare Polyethylene niedriger Dichte (LLDPE), Ethylen-Acrylsäurealkylester-Copolymere, Ethylen-Methacrylsäurealkylester-Copolymere und insbesondere Polyethylene hoher Dichte (HDPE).

Als Monomere mit polaren Gruppen zur Modifikation der Polyolefine werden ethylenisch ungesättigte Säuren, deren Anhydride und/oder ethylenisch ungesättigte Epoxidverbindungen oder Kombinationen von mehreren dieser Monomeren eingesetzt.

Bei den ethylenisch ungesättigten Säuren kann es sich um beliebige mit alpha-Olefinen polymerisierbare ethylenisch ungesättigte Reste handeln, die mindestens eine saure Gruppe im Molekül aufweisen. Beispiele dafür sind ethylenisch ungesättigte Sulfonsäuren, ethylenisch ungesättigte Phosphonsäuren oder insbesondere ethylenisch ungesättigte Carbonsäuren. Bevorzugt werden ethylenisch ungesättigte Carbonsäuren mit ein oder zwei Carboxylgruppen eingesetzt.

Beispiele für bevorzugte Monomere dieses Typs sind Acrylsäure, Methacrylsäure, Maleinsäure, Fumarsäure oder Itaconsäure.

Anstelle der oder zusammen mit den oben aufgezählten Säuren können auch deren Anhydride eingesetzt werden.

Bei den ethylenisch ungesättigten Epoxidverbindungen kann es sich um beliebige mit alpha-Olefinen polymerisierbare Monomere handeln, die neben einer ethylenisch ungesättigten Gruppe mindestens eine Epoxidgruppe im Molekül aufweisen. Beispiele dafür sind Glycidylester von ethylenisch ungesättigten Säuren, insbesondere von ethylenisch ungesättigten Carbonsäuren.

Beispiele für bevorzugte Monomere dieses Typs sind Glycidylester der Acrylsäure, Methacrylsäure, Maleinsäure, Fumarsäure oder Itaconsäure.

Neben den bislang beschriebenen Monomeren können die modifizierten Polyolefine gegebenenfalls weitere polare Gruppen enthalten. Bevorzugt werden Ester ethylenisch ungesättigter Carbonsäuren eingesetzt. Besonders bevorzugt werden Copolymere eingesetzt, die von mindestens einem alpha-Olefin und mindestens einer ethylenisch ungesättigten Säure oder deren Anhydrid oder einer ethylenisch ungesättigten Epoxidverbindung abgeleitet sind.

Weiterhin bevorzugt eingesetzt werden Terpolymere, die sich ableiten von
a) mindestens einem alpha-Olefin,
b) von mindestens einem Ester einer ethylenisch ungesättigten Carbonsäure und
c) von mindestens einer ethylenisch ungesättigten Säure oder dem Anhydrid einer ethylenisch ungesättigten Säure oder von einer ethylenisch ungesättigten Epoxidverbindung.

Bevorzugte Ester von ethylenisch ungesättigten Carbonsäuren sind die Alkylester, vorzugsweise von Alkylgruppen mit ein bis sechs Kohlenstoffatomen.

Besonders bevorzugte Beispiele sind die Methyl-, Ethyl-, Propyl-, Butyl-, Pentyl- oder Hexylester der Acrylsäure, Methacrylsäure, Maleinsäure, Fumarsäure oder Itaconsäure.

Der Anteil der Monomereinheiten mit Säure-, Anhydrid- und/oder Epoxidgruppen in den modifizierten Polyolefinen ist in der Regel recht gering und überschreitet typischerweise den Gehalt von 10 mol% nicht.

Zur Herstellung der mit polaren Gruppen modifizierten Polyolefine können ebenfalls die oben beschriebenen an sich bekannten Verfahren eingesetzt werden.

Modifizierte Polyolefine dieses Typs sind bekannt und kommerziell erhältlich. Beispiele für diese Produkte sind Produkte des Typs Lotader® (Atochem) oder des Typs Orevac® (Atochem).

Die erfindungsgemäß eingesetzten Heißsiegelkleber können daneben noch weitere an sich übliche Hilfsstoffe enthalten. Diese werden in Abhängigkeit des gewünschten Eigenschaftsprofils und der Aufbringungs- und Verarbeitungsweise des Heißsiegelklebers zugesetzt. Beispiele für solche Zusätze sind Emulgatoren, Verdicker, Pigmente und Verarbeitungshilfsmittel.

Die Herstellung der erfindungsgemäß eingesetzten Heißsiegelkleber kann dabei auf verschiedenen Wegen erfolgen.

Beispiele dafür sind die Vermahlung der Komponenten mit nachheriger Pulvermischung, die Mischung der Komponenten in Granulatform mit anschließender Vermahlung, sowie die Mischung der Komponenten mittels Extrusion gefolgt von anschließender Vermahlung.

Das Auftragen der Heißsiegelkleber kann ebenfalls nach unterschiedlichen an sich bekannten Verfahren erfolgen.

So kann in einem ersten Schritt eine Paste des ersten Heißsiegelkebers auf das textile Flächengebilde in Form eines regelmäßigen oder vorzugsweise irregulären Musters aufgetragen werden. Der Auftrag kann dabei durch Siebdruck oder durch Aufbringen durch eine strukturierte Walze erfolgen. In einem zweiten Schritt kann dann ein Pulver aus dem zweiten Heißsiegelkleber auf das textile Flächengebilde aufgestreut werden, dass an den Stellen des ersten Heißsiegelklebers an der Paste kleben bleibt. Von den übrigen Stellen der Oberfläche des textilen Flächengebildes kann das Pulver durch Absaugen entfernt werden. In einer nachfolgenden thermischen Behandlung werden der erste und zweite Heißsiegelkleber als übereinanderliegende Schichten fixiert.

Die Heißsiegelkleber werden in Form eines regelmäßigen oder vorzugsweise irregulären Musters auf die Oberfläche des textilen Flächengebildes aufgetragen. Das Beschichtungsraster kann linien-, netz- oder spiralförmig sein oder kann in jeder anderen regelmäßig oder irregulär angeordneten Rasterform ausgeführt sein. Bevorzugt werden die Heißsiegelkleber in Form von Punktrastern, die vorzugsweise irregulär sind, aufgetragen.

Gemäß einer bevorzugten Ausführungsform der Erfindung umfasst das thermisch fixierbare Flächengebilde eine Trägerlage aus einem Faserflor, welches in ausgewählten Flächenbereichen mittels eines Bindemittels gebunden ist, wobei wenigstens auf einer Seite der Trägerlage eine zweilagige Haftmassenstruktur aufgebracht ist, welche ein Bindemittel und ein thermoplastisches Polymer in Partikelform umfasst.

Ein solches Flächengebilde ist erhältlich durch ein Verfahren mit den folgenden Verfahrensschritten:
a) Bereitstellen einer Trägerlage aus einem Faserflors, beispielsweise durch Herstellen eines Faserflors auf einer Ablagevorrichtung in an sich bekannte Weise,
b) Vorbehandeln des Faserflors mittels eines Niederdruck-Wasserstrahlverfahrens,
c) Auftragen einer Mischung auf Flüssigkeitsbasis aus dem Bindemittel und dem thermoplastischen Polymer, vorzugsweise einer wässrigen Dispersion/Paste aus dem Bindemittel und dem thermoplastischen Polymer, auf ausgewählte Flächenbereiche des Faserflors und
d) Temperaturbehandlung des aus Schritt c) erhaltenen Faserflors mit dem Gemisch zum Trocknen und zum Verbinden von Fasern des Faserflors durch das Bindemittel zu einem Vliesstoff und gegebenenfalls Vernetzung des Bindemittels und zum Auf- und Zusammensintern des thermoplastischen Polymers auf der/mit der der Oberfläche der Trägerlage.

Das textile fixierbare Flächengebilde zeichnet sich durch ein hohes Haftvermögen aus. Es hat sich in überraschender Weise gezeigt, dass ein Bindungspunkt aus Bindemittel und thermoplastischem Polymer in Partikelform, welches als Haftmasse fungiert, ein vergleichbar hohes Haftvermögen wie der an sich bekannte Haftmassenpunkt der 3P/Doppelpunkt-Struktur besitzt. Im Gegensatz zu diesem lässt sich der erfindungsgemäße Bindungspunkt aber in einem Einschrittverfahren auftragen, wobei dieser Verfahrensschritt noch gleichzeitig den Auftrag des Bindemittels zur Herstellung des Vliesstoffes aus dem Faserflor beinhaltet. Das textile fixierbare Flächengebilde ist damit auch noch einfach und kostengünstig herstellbar.

Dadurch, dass der Bindungspunkt aus Bindemittel und thermoplastischen Polymer auch gleichzeitig partiell den Faserbindungspunkt bildet, ergibt sich eine maximal mögliche Beweglichkeit der Fasern zwischen den Verfestigungspunkten. Das textile Flächengebilde zeichnet sich damit durch eine hohe Sprungelastizität, eine hohe Weichheit und einen angenehmen Griff aus. Da das textile Flächengebilde im Gegensatz zu den bekannten Einlagestoffen kein zusätzliches aufgebrachtes Punktraster besitzt, tritt auch der aus dem Stand der Technik bekannte unerwünschte Moire-Effekt auch bei Verwendung von durchscheinenden Oberstoffen nicht auf. Das erfindungsgemäße textile Flächengebilde bietet dadurch ein angenehmes optisches Erscheinungsbild.

Ferner wird ein Verbund aus einem thermisch fixierbaren textilen Flächengebilde und einem Oberstoff hergestellt nach einem wie oben dargestellten Verfahren beschrieben, sowie die Verwendung eines solchen Verbunds zur Herstellung von Oberbekleidung.

Im folgenden wird die Erfindung anhand von Beispielen näher erläutert:

### Beispiel 1

Ein längs/quer gelegter Faserflor aus 75g/m² 100% PES Fasern 1,7dtex/38mm wird gekrempelt und thermisch nach dem PS- (Punkt-Schweissverfahren) mit einer Gravurwalze mit 12% Bindefläche gebunden. Dieser PS-Vliesstoff wird in einem zweiten Schritt mit einem Schmelzkleber nach dem Doppelpunktverfahren beschichtet. Dabei wurde für den Unterpunkt eine Paste eingesetzt, die mit den üblichen Hilfsstoffen, wie Emulgator, Verdicker und Prozesshilfsmitteln, angesetzt war. Als Polymerkomponenten enthielt die Paste ein Polypropylen mit einem Schmelzpunkt von 160°C und einem MFI-Wert von 50 (g/10 min bei 190°C und 2,16 kg Belastung). Als Streupulver für den Oberpunkt wurde ein Polypropylen mit einem Schmelzpunkt von 160 °C und einem MFI-Wert von größer 150 (g/10 min bei 190°C und 2,16 kg Belastung) eingesetzt.Im Beschichtungsprozess wurden 10g Unterpunktpaste aufgetragen und mit 19g Streupulver belegt

### Beispiel 2

Ein 85g/m² schweres 1/3 Gewebe aus texturierten Polyesterfilamenten mit 2x 22dtex/f15 wurde nach den bekannten textilen Verfahren, Weben, Bauschen, Ausrüsten und Thermofixieren hergestellt. Dieses Gewebe wird in einem zweiten Schritt mit einem Schmelzkleber nach dem Doppelpunktverfahren beschichtet. Dabei wurde für den Unterpunkt eine Paste eingesetzt, die mit den üblichen Hilfsstoffen, wie Emulgator, Verdicker und Prozesshilfsmitteln, angesetzt war. Als Polymerkomponenten enthielt die Paste ein Polypropylen mit einem Schmelzpunkt von 160°C und einem MFI-Wert von 0 (g/10 min bei 190°C und 2,16 kg Belastung). Als Streupulver für den Oberpunkt wurde ein modifizertes Polypropylen mit einem Schmelzpunkt von 145°C und einem MFI-Wert von größer 40 (g/10 min bei 190°C und 2,16 kg Belastung) eingesetzt. Im Beschichtungsprozess wurden 10g Unterpunktpaste aufgetragen und mit 19g Streupulver belegt.

### Beispiel 3

Ein marktübliches 120g/m² schweres Celluloseacetatfutterstoffgewebe wurde in einem zweiten Schritt mit einem Schmelzkleber nach dem Pastenpunktverfahren beschichtet. Dabei wurde eine Paste eingesetzt, die mit den üblichen Hilfsstoffen, wie Emulgator, Verdicker und Prozesshilfsmitteln, angesetzt war. Als Polymerkomponenten enthielt die Paste ein Polyurethanpulver mit einem Schmelzbereich von 145 - 155°C und einem MFI-Wert von größer als 200 (g/10 min bei 190°C / Belastung von 2,16 kg). Von dieser Paste wurden mit einer CP110 Schablone 18g/m² aufgedruckt und bei 170°C schonend getrocknet und angesintert.

## Patentansprüche

1. Verfahren zur Herstellung eines Verbunds aus einem Oberstoff und einem thermisch fixierbaren textilen Flächengebilde bei gleichzeitigem Auftrag eines Dessins durch Thermoumdruck umfassend folgende Verfahrensschritte:
a) Bereitstellung der Komponenten:
1) mit einem Dessin bedrucktes Thermoumdruckmedium
2) mit einer Haftmasse versehenes, thermisch fixierbares, textiles Flächengebilde, vorzugsweise ausgebildet als Einlage- und/oder Futterstoff und
3) Oberstoff;
b) Zusammenführung der Komponenten bei gleichzeitiger Hitzebehandlung und Druckbehandlung des Verbunds bei einer Temperatur von 160 bis 240°C, wobei mindestens eine Außenfläche des textilen Flächengebildes mit dem Dessin versehen wird und simultan eine Fixierung des Flächengebildes am Oberstoff stattfindet.

2. Verfahren nach Anspruch 1, **dadurch gekennzeichnet, dass** das Bedrucken der Außenfläche des textilen Flächengebildes nach dem Transferdruckverfahren mit zwischen 160 und 240 °C sublimierbaren Dispersionsfarbstoffen durchgeführt wird.

3. Verfahren nach Anspruch 1 oder 2, **dadurch gekennzeichnet, dass** man als Dispersionsfarbstoffe anthrachinoide Farbstoffe, wie Hydroxy- und/oder Aminoanthrachinone, Azofarbstoffe, Chinophthalonfarbstoffe, Azomethinfarbstoffe, Stilbenfarbstoffe oder Nitrodiarylaminfarbstoffe verwendet.

4. Verfahren nach einem oder mehreren der Ansprüche 1 bis 3, **dadurch gekennzeichnet, dass** das thermisch fixierbare textile Flächengebilde eine Trägerlage aus einem Faserflor aufweist, welcher thermisch, vorzugsweise mit dem Punkt-Schweissverfahren oder mittels eines Wasserstrahlverfahrens gebunden ist und wobei mindestens auf der dem Oberstoff zugewandten Seite der Trägerlage eine Haftmassenstruktur aufgebracht ist.

5. Verfahren nach einem oder mehreren der Ansprüche 1 bis 4, **dadurch gekennzeichnet, dass** die Haftmassenstruktur mindestens einen schmelzfähigen Heißsiegelkleber enthält, vorzugsweise umfassend ein thermoplastische Polymer ausgewählt aus der Gruppe bestehend aus (Co)-Polyester-, (Co)-Polyamid-, Polyolefin-, Polyurethan-, Ethylenvinylacetatbasierende Polymere und/oder Kombinationen (Gemische und Copolymerisate) der genannten Polymere.

6. Verfahren nach einem der Ansprüche 1 bis 5, **dadurch gekennzeichnet, dass** die Haftmassenstruktur in einem regulär oder irregulär verteilten Punktmuster auf die Trägerlage aufgebracht ist

7. Verfahren nach einem oder mehreren der Ansprüche 1 bis 6, **dadurch gekennzeichnet, dass** die Haftmassenstruktur aus zwei übereinander angeordneten Schichten besteht, wobei die Schichten thermoplastische Heißsiegelkleber unterschiedlicher Zusammensetzung enthalten.

8. Verfahren nach einem oder mehreren der Ansprüche 1 bis 7, **dadurch gekennzeichnet, dass** die Haftmassenstruktur aus der dem Flächengebilde zugewandten Unter- und darüber angeordneten, dem Oberstoff zugewandten Oberpunkten bestehen.

9. Verfahren nach einem oder mehreren der Ansprüche 1 bis 8, **dadurch gekennzeichnet, dass** die erste Lage einen ersten Heißsiegelkleber und die zweite Lage einen zweiten Heißsiegelkleber enthält, wobei der auf dem ersten Heißsiegelkleber aufgetragene zweite Heißsiegelkleber einen Schmelzpunkt größer 135°C und einen Melt-Flow-Index (MFI)-Wert von 50 bis 250 g/10 Minuten (190°C/2,16 kg) aufweist.

## Claims

1. Process for producing a composite between an outer fabric and a thermally fusible textile sheet material while at the same time applying a design by thermal transfer printing, comprising the steps of
a) providing the components:
1) a thermal transfer printed with a design,
2) a thermally fusible textile sheet material provided with an adhesive compound, preferably constructed as lining and/or interlining fabric, and
3) an outer fabric;
b) combining the components while simultaneously subjecting the composite to heat and pressure at a temperature of 160 to 240°C whereby the design is provided to at least one outside surface of the textile sheet material and there is simultaneous fusing of the sheet material to the outer fabric.

2. Process according to Claim 1, **characterized in that** the outside surface of the textile sheet material transfer printed with disperse dyes sublimable at between 160 and 240°C.

3. Process according to Claim 1 or 2, **characterized in that** disperse dyes used comprise anthraquinonoid dyes, such as hydroxy- and/or aminoanthraquinones, azo dyes, quinophthalone dyes, azomethine dyes, stilbene dyes or nitrodiarylamine dyes.

4. Process according to one or more of Claims 1 to 3, **characterized in that** the thermally fusible textile sheet material has a backing ply in a fibrous web in a thermally bonded state, preferably as a result of applying the point-welding process, or in a hydroentangled state, and at least the backing ply side facing the outer fabric bears an adhesive compound structure.

5. Process according to one or more of Claims 1 to 4, **characterized in that** the adhesive compound structure contains at least one meltable heat-sealing adhesive, preferably comprising a thermoplastic polymer selected from the group consisting of (co)polyester, (co)polyamide, polyolefin, polyurethane, ethylene-vinyl acetate based polymers and/or combinations (mixtures and copolymers) thereof.

6. Process according to any of Claims 1 to 5, **characterized in that** the backing ply bears the adhesive compound structure in a regularly or irregularly distributed pattern of points.

7. Process according to one or more of Claims 1 to 6, **characterized in that** the adhesive compound structure consists of two superposed layers, wherein the layers contain thermoplastic heat-sealing adhesives differing in composition.

8. Process according to one or more Claims 1 to 7, **characterized in that** the adhesive compound structure consists of underpoints, facing the sheet material, and superior overpoints, facing the outer fabric.

9. Process according to one or more of Claims 1 to 8, **characterized in that** the first and second plies contain a first and a second heat-sealing adhesive respectively, wherein the second heat-sealing adhesive applied atop the first heat-sealing adhesive has a melting point above 135°C and a melt flow index (MFI) value of 50 to 250 g/10 minutes (190°C/2.16 kg).

## Revendications

1. Procédé de fabrication d'un composite constitué par un tissu supérieur et une structure textile plate pouvant être fixée thermiquement lors de l'application simultanée d'un dessin par impression thermique, comprenant les étapes de procédé suivantes :
a) la préparation des composants :
1) un support d'impression thermique imprimé avec un dessin,
2) une structure textile plate pouvant être fixée thermiquement, munie d'une masse adhésive, de préférence configurée sous la forme d'un entoilage et/ou d'une doublure, et
3) un tissu supérieur ;
b) la réunion des composants avec traitement thermique simultané et le traitement sous pression du composite à une température de 160 à 240 °C, au moins une surface extérieure de la structure textile plate étant munie du dessin et une fixation de la structure plate sur le tissu supérieur ayant lieu simultanément.

2. Procédé selon la revendication 1, **caractérisé en ce que** l'impression de la surface extérieure de la structure textile plate est réalisée par le procédé d'impression par transfert avec des colorants en dispersion pouvant être sublimés entre 160 et 240 °C.

3. Procédé selon la revendication 1 ou 2, **caractérisé en ce que** des colorants anthraquinoïdes, tels que des hydroxy- et/ou amino-anthraquinones, des colorants azoïques, des colorants quinophtalone, des colorants azométhine, des colorants stilbène ou des colorants nitrodiarylamine sont utilisés en tant que colorants en dispersion.

4. Procédé selon une ou plusieurs des revendications 1 à 3, **caractérisé en ce que** la structure textile plate pouvant être fixée thermiquement comprend une couche support en une toile fibreuse, qui est reliée thermiquement, de préférence par le procédé de soudage ponctuel ou par un procédé à jet d'eau, une structure de masse adhésive étant appliquée au moins sur le côté orienté vers le tissu supérieur de la couche support.

5. Procédé selon une ou plusieurs des revendications 1 à 4, **caractérisé en ce que** la structure de masse adhésive contient au moins un adhésif thermosoudable fusible, de préférence comprenant un polymère thermoplastique choisi dans le groupe constitué par les polymères à base de (co)polyester, (co)polyamide, polyoléfine, polyuréthane, éthylène-acétate de vinyle et/ou des combinaisons (mélanges et copolymères) des polymères mentionnés.

6. Procédé selon l'une quelconque des revendications 1 à 5, **caractérisé en ce que** la structure de masse adhésive est appliquée selon un motif ponctuel réparti de manière régulière ou irrégulière sur la couche support.

7. Procédé selon une ou plusieurs des revendications 1 à 6, **caractérisé en ce que** la structure de masse adhésive est constituée par deux couches agencées l'une sur l'autre, les couches contenant des adhésifs thermosoudables thermoplastiques de composition différente.

8. Procédé selon une ou plusieurs des revendications 1 à 7, **caractérisé en ce que** la structure de masse adhésive est constituée par des points inférieurs, orientés vers la structure plate, et des points supérieurs, agencés au-dessus, orientés vers le tissu supérieur.

9. Procédé selon une ou plusieurs des revendications 1 à 8, **caractérisé en ce que** la première couche contient un premier adhésif thermosoudable et la deuxième couche contient un deuxième adhésif thermosoudable, le deuxième adhésif thermosoudable appliqué sur le premier adhésif thermosoudable présentant un point de fusion supérieur à 135 °C et une valeur d'indice de fluidité à chaud (MFI) de 50 à 250 g/10 minutes (190 °C/2,16 kg).
